(19) Europäisches Patentamt
European Patent Office
Office européen des brevets

(11) **EP 0 752 972 B1**

(12) **EUROPEAN PATENT SPECIFICATION**

(45) Date of publication and mention
of the grant of the patent:
**06.10.1999 Bulletin 1999/40**

(51) Int. Cl.$^6$: **B65G 47/24**, B65G 47/244

(21) Application number: **95916403.9**

(86) International application number:
**PCT/US95/04640**

(22) Date of filing: **10.04.1995**

(87) International publication number:
**WO 95/27671 (19.10.1995 Gazette 1995/45)**

(54) **TURNING APPARATUS FOR PACKAGES**

DREHVORRICHTUNG FÜR VERPACKUNGEN

APPAREIL SERVANT A FAIRE TOURNER UN EMBALLAGE

(84) Designated Contracting States:
**BE DE ES FR GB IT NL**

(30) Priority: **08.04.1994 GB 9406987**

(43) Date of publication of application:
**15.01.1997 Bulletin 1997/03**

(73) Proprietor: **THE MEAD CORPORATION**
**Dayton Ohio 45463 (US)**

(72) Inventor: **PIVOIS, Guy**
**F-36130 Déols (FR)**

(74) Representative:
**Hepworth, John Malcolm et al**
**Hepworth Lawrence Bryer & Bizley**
**Bloxam Court**
**Corporation Street**
**Rugby, Warwickshire CV21 2DU (GB)**

(56) References cited:
**WO-A-92/18388          US-A- 4 058 200**
**US-A- 4 499 990          US-A- 4 807 739**

## Description

The invention relates to apparatus for turning packages, such as cartons containing articles like cans or bottles, through a predetermined angle as they are conveyed from say a carton loading section to a palletising section of packaging apparatus.

Known apparatus of this type is disclosed by, for example, Bowen in US3128868 which presents a stationary turning device adjacent a carton conveyor. The turning device protrudes into the path of the conveyed cartons so that the end of one side of a carton hits the device causing the carton to rotate as it is conveyed by the conveyor. More recently, Flot in US4883162 describes how to rotate bags using a rotating wheel with radially protruding arms which initially abut the leading edge of a bag. The wheel is set by design to rotate at a fixed speed relative to the speed of conveyed bags so as to cause rotation of a bag through a fixed angle.

Problems exist in the prior art in damaging packaging and in lack of flexible control of turning apparatus and control of the angle of rotation of packaging. This is especially true in relation to relatively high speed conveying processes. In such prosees packaging can be conveyed at say 60 metres per minute, or more or less depending on the process. The invention seeks to avoid or at least mitigate these and other problems of the prior art and according to one aspect of the invention there is provided apparatus for turning packaging comprising a turning device for abutting and turning a package as it is conveyed along a feed path, said turning device being attached to a drive mechanism which operatively moves the turning device through a path which at least in part allows the turning device to protrude into the feed path of the package, the apparatus further comprising a controller for controlling the drive mechanism having means for determining the speed of movement of the package along the feed path and means to enable the controller to determine incidence of a package with the turning device and wherein the controller ensures that the turning device is moving at a speed less than the package at the point of incidence.

Preferably the turning device moves along a linear path when abutting the package. The path of movement of the turning device can be endless or a reciprocal linear path for example.

Preferably the controller adjusts the drive mechanism so that the speed of the turning device is in the order of one third of a metre per second (or about 20 metres per minute) slower than the speed of the package when the turning device and package abut.

The turning device can comprise an arm which preferably has a face operative to abut the packaging and which is contoured to enable the packaging to stay in contact with the face whilst the packaging turns.

Preferably the turning device comprises a stopper which inhibits further rotation of packaging beyond a certain angle. The stopper can comprise a lug which operatively protrudes from the turning device substantially along the direction of the packaging feed path when the turning device is moving along the corresponding part of its path of movement so that the package is restricted from rotating beyond the lug.

The invention will now be described, by way of example only, with reference to the accompanying drawings, in which:

FIGURE 1 is a perspective view of apparatus according to the invention;

FIGURE 2 is a perspective view of part of a second embodiment of apparatus according to the invention;

FIGURE 3 is a perspective view of a conveyor assembly having two of the turning machines shown in Figure 2; and

FIGURES 4 to 9 are schematic plan views of the apparatus shown in Figure 2 at different states of the turning pross.

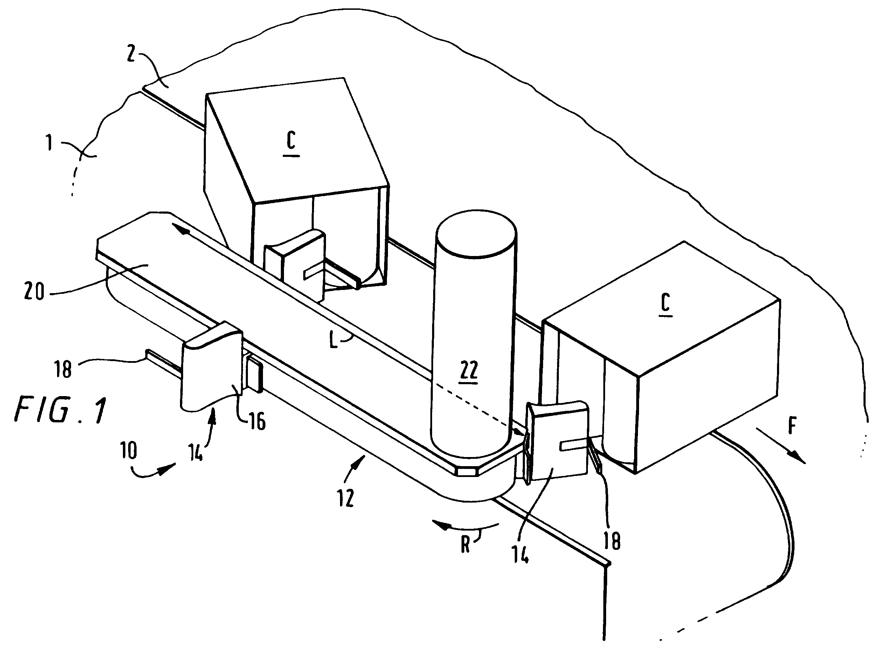

Turning apparatus 10 according to a first embodiment of the invention is shown in perspective view in Figure 1. The apparatus 10 comprises turning devices 14 which are conveyed along an endless path by means of a conveyor 12 such as a chain mounted on sprockets. The conveyor 12 is driven by a motor 22 which in turn is controlled by a controller (not shown) such that the speed of rotation of the turning devices 14 along the endless path is variable.

The turning devices 14 are caused to rotate in the direction R such that over a part of the endless path they protrude across a packaging conveyor 1 into the path of packaging C moving along a feed path F.

The speed of movement of a turning device 14 along the path L of the end less path is controlled by the controller, such as a microprocessor system, so that at the point of impact between a device 14 and a package C the device 14 is moving at a controlled speed less than the speed of movement of the packaging C along the feed path F. By providing a sensor (not shown) which communicates with the controller, the movement of turning devices 14 can be controlled such that a turning device 14 is located at the near end of path L as a carton such as C arrives at the turning apparatus. Since the speed of movement of the turning device 14 is less than that of the carton C along the feed path F, the carton C is caused to rotate about the turning device 14. In this example, the packaging C is a carton carrying an array of cylindrical articles such as cans and turning device 14 is contoured so that the surface of an individual can abutting face 16 of a turning device 14 remains in contact with face 16 showing rotation of packaging C. The centre of mass of the package C gradually moves away from the apparatus 10 as the carton C turns until the originally leading face of the carton C abuts a stopper 18. In this example stopper 18 protrudes at a right angle from the outer most edge of turning device 14 thus, since turning device 14 protrudes substantially tangentially from the path L which is aligned with the feed path F of the cartons, the cartons C are caused to rotate through a 90° angle only. Naturally, the orientation of the path at the end of the loop L with respect to the feed path can be made as can the orientation of the protruding turning device 14 from the feed path, or even the orientation of the stopper 18 with respect to either the turning device 14 or the feed path L to cause a different rotation angle of a carton C.

In this embodiment, the difference in speeds of the turning device 14 along path L and carton C along feed path F is preferably in the order of 20 metres per minute. This produces the desired effect of rotating the carton C through 90°, according to this example, in a reasonable distance L whilst at the same time minimising the risk of any damage to packaging C as it abuts the face 16 of a turning device 14. In this embodiment it was found that three turning devices 14 can be used. As rotation of one package is effected through 90°, a second carton C can be engaged by a second turning device 14. However, any number of turning devices could be used and indeed the length L of the turning apparatus can be varied. The apparatus is covered by an upper plate 20 which is contoured at the leading edge so that it guides cartons away from the turning apparatus back into the conveyors 1 and 2.

In order to control the driving mechanism which operates the conveyor 12 it is possible to provide a controller with sensors such as a pair of optical sensors positioned upstream of the apparatus 10 so that packaging C can first be detected by one of the optical sensors and the speed of packaging determined by the time for the second optical sensor to detect the same package. The sensor can thus provide the controller with information regarding the position of a package C at a given time and its speed along the feed path F. Alternatively, a single sensor could be used to detect the presence of a carton at a predetermined position along the feed path and a separate sensor, which could be an input directly from the packaging conveyor (1 and 2) drive mechanism, can be used to provide information regarding the speed of movement of packaging C along the conveyors 1 and 2 in the feed path F.

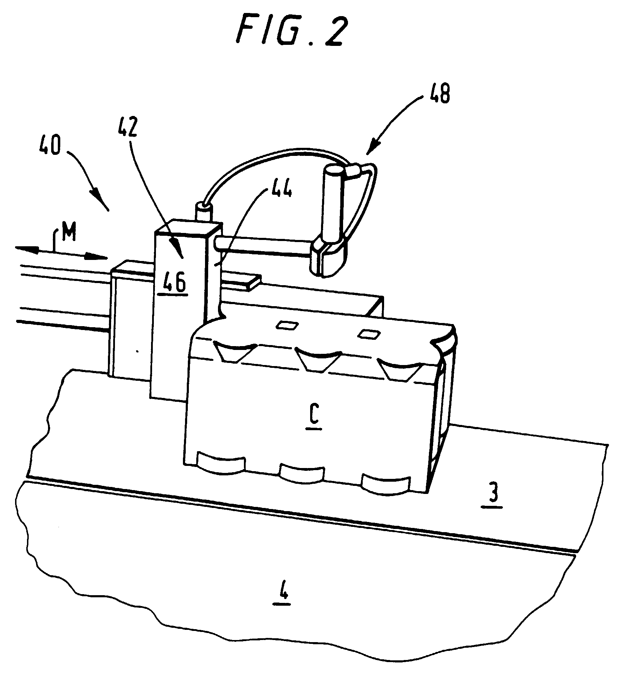

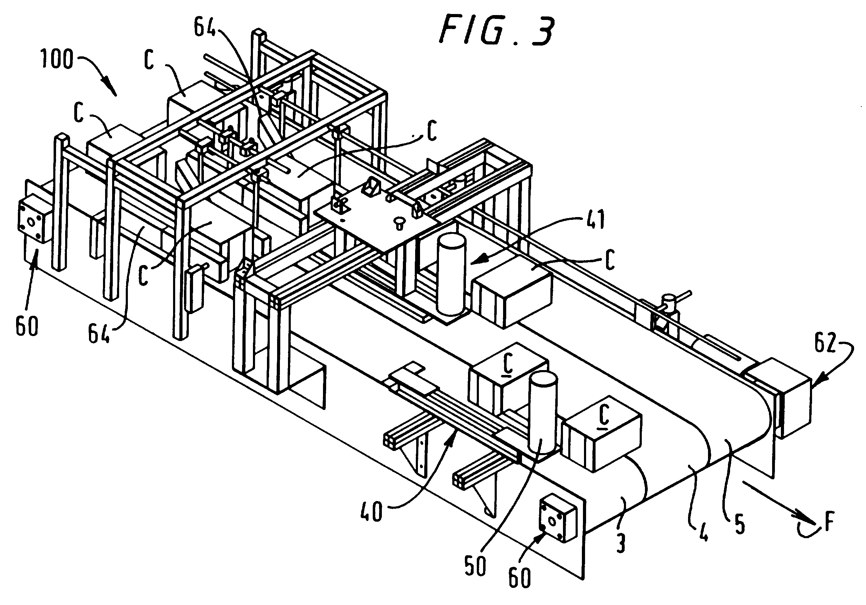

Referring now to Figures 2 to 9 there is shown a turning apparatus 40 wherein the turning device 42 reciprocates along a substantially linear path M. The apparatus 40 can form part of a larger conveying assembly 100 comprising for example a second turning apparatus 41 as shown in Figure 3, though of course, any number of turning apparatus could be provided. In the overall assembly 100, three packaging conveyor belts 3, 4 and 5 are driven at the same uniform speed by a controller and motor 62. It can be seen that the assembly 100 comprises safety stop button 60 to stop the movement of the conveyor.

Cartons C are fed into assembly 100, for example typically having just been formed in a wrapping system, and are led through guides 64 which tunnel cartons into a desired feed path suitable for the operation of the turning apparatus 40 or 41. The general direction of the feed direction of the carton C is indicated by the arrow labelled F in Figure 3.

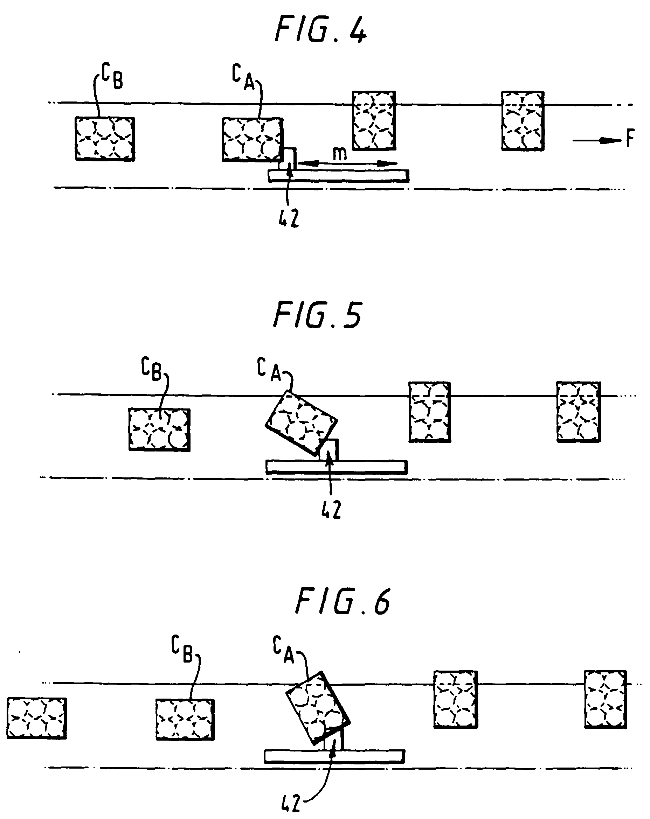

The preferred operation of turning apparatus 40 can be described with reference to Figures 4 to 9. Turning device 42 waits at a downstream position as indicated substantially in Figures 2 and 4. A package detection signal is sent from a sensor to a controller thereby alerting it to the arrival of a package at turning device 42. For example, an optical sensor such as 48 can be used which is attached to and positioned a predetermined distance away from the abutting surface 44 of the tuning device 42. The controller, knowing the speed of movement of a package C, for example using sensors as described in the previous embodiment, can then determine the time at which turning device 42 is to begin movement along path M. Preferably, turning device 42 remains stationary until the pack is very close to it, for example, approximately 2cm away. The turning device 42 is then accelerated to a speed Dual to that of the speed of carton C minus 17 metres per minute. Shortly after turning device 42 begins to move its trailing face, (or abutting surface) 44 is hit by the leading face of package C. The abutting surface 44 can be contoured in a manner described in relation to the first embodiment and can comprise some form of resilient member to absorb the force of impact of carton C, or could be substantially flat as shown in Figure 2.

Of course, the relative speed of the turning device 42 and carton C can be accurately controlled by starting the movement of turning device 42 when the carton and turning device 42 are displaced by a distance different to that stated above and by accelerating the turning device 42 at a different rate. Of course, the controller could ensure that turning device 42 was moving at substantially the same speed as carton C when they abut thus ensuring that the impact force is kept to a minimum and thereby the risk of damage to the carton C is minimised.

After turning device 42 and carton C abut it is preferable to decelerate the turning device 42 so that a quicker tuning effect on carton C is achieved compared to if 42 is maintained at a constant, albeit slower, speed than a package C. Therefore, preferably tuning device 42 is decelerated at a constant rate until it stops at the end of its reciprocating path of movement M. Of course, the controller can be programmed to be continuously adjustable to achieve the turning of a package without risk of damage within certain path lengths and speeds of movement of carton C. Alternatively, if the apparatus 40 is to be used with a known packaging and conveying system which only operates at certain fixed speeds, then for ease of operation the controller can be programmed to certain fixed parameters adapted for switching between these preset packaging conveyor speeds and frequency of cartons.

For example, for a conveyor speed of 50m per minute (or 833mm per second) and where the packs have a frequency of 2 packs per second per lane and the packs C have a length of 200mm, the gap between the packs is about 260.5mm. In order to achieve rotation of a pack C in these conditions, the turning device 42 is accelerated to a speed of 33m per minute (or 550mm per second) at a relatively high rate of acceleration so that impact with the carton and abutting surface 44 occurs at the end of the acceleration ramp. The turning device 42 is then decelerated and is thus controlled according to the following formula:

$$X = X_O + V_O T + 1/2\, G_O T^2$$

where X is the displacement of the turning device 42 along path M where X = 0 at its stationary, waiting position. $X_O$ is the position of impact and is thus the origin position given by the sensor and the acceleration distance. $X_O$ can for example be in the order of 20mm. $V_O$ is the linear speed of the turning device 42 and for example can be 550mm per second in the arrangement just described. $G_O$ is the deceleration of the turning device which is of course adjustable by the controller depending on the speed level of the system. In the example given above, $G_O$ can be 3000mm per second$^2$.

According to the arrangement described here, the turning device 42 moves through a maximum distance of approximately 70mm in a total time of about 450 milliseconds which includes a time of 410 milliseconds to complete the path described by the above equation, from impact back to the origin, plus a period of acceleration time in the order of 40 milliseconds prior to impact. It is of course apparent that the displacement of the turning device against time is parabolic given the above quadratic equation. Of course, other linear speeds of $V_O$ and rates of acceleration $G_O$ could be used.

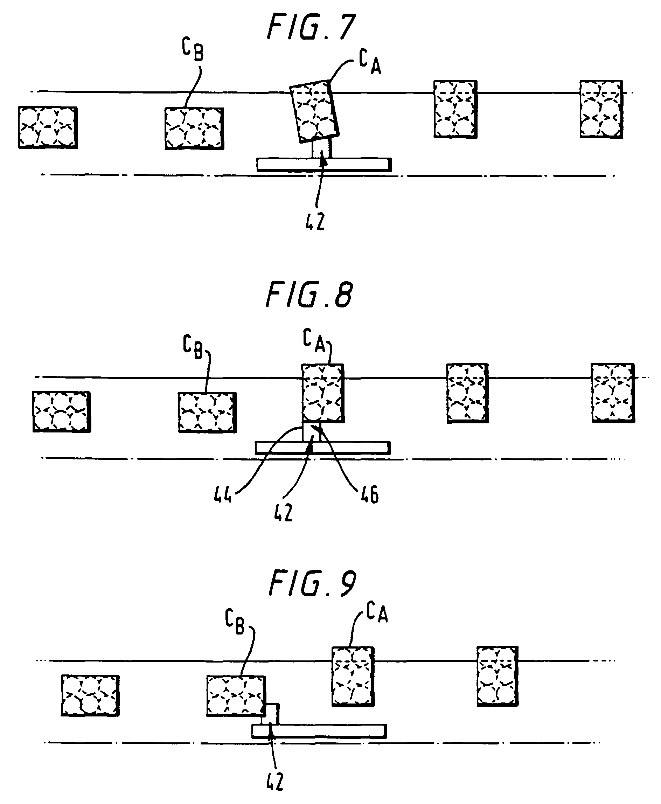

With reference to Figures 4 to 9 the effect of the relative movement of tuning device 42 along path M with respect to a carton $C_A$ as shown. $C_A$ abuts the leading face 44 of turning device 42 as shown in Figure 4 and is caused to rotate due to the difference in relative speeds and the turning moment which is created due to the relative position of the centre of mass of carton $C_A$ with respect to the decelerating turning device 42 which is displaced from this centre of mass. Carton $C_A$ gradually turns through an angle of 90° as shown in Figures 5 to 8 at which time the leading face of the carton $C_A$ is substantially parallel with guide surface 46 of turning device 42 which can act to limit the extent of rotation of carton $C_A$, though in practice it is found that this might not be necessary. Thus, turning device 42 is disengaged from pack $C_A$ and can return to its starting, downstream position indicated substantially in Figure 9 wherein this is ready to abut a second pack $C_B$.

Whilst cartons of a wraparound variety for cans are shown in the various drawings, the turning device and apparatus described herein is of course applicable to all manner of conveyed articles.

The preferred relative velocity of carton to turning device, is preferably less than 20 metres per minute, more preferably less than 17 metres per minute and can be any value of speed or within any range of speeds between 20 metres per minute and 1mm per second, all such ranges and values are therefore inherently disclosed hereby.

## Claims

1. Apparatus for turning packaging comprising a turning device (14, 42) for abutting and turning a package (C) as it is conveyed along a feed path (F), said turning device (14, 42) being attached to a drive mechanism (22) which operatively moves the turning device through a path (L, M) which at least in part allows the turning device to protrude into the feed path of the package, characterised in that the apparatus further comprising a controller for controlling the drive mechanism having means (48) for determining the speed of movement of packaging along the feed path and means to enable the controller to determine incidence of a package with the turning device and wherein the controller ensures that the turning device is moving at a speed less than the package at the point of incidence thereby to cause the package to turn.

2. Apparatus according to claim 1 wherein the path of movement of the turning device when in contact with a package is substantially linear.

3. Apparatus according to claim 2 wherein the turning device (42) reciprocates along a substantially linear path (M) of movement.

4. Apparatus according to claim 2 wherein the turning device (14) moves along an endless path.

5. Apparatus according to claim 3 comprising two or more turning devices displaced from one another along the endless path.

6. Apparatus according to any preceding claim wherein the controller adjusts the drive mechanism (22) so that the speed of the turning device (14, 42) is approximately one third of a metre per second (or about 20 metres per minute) slower than the speed of the package (C) at the time the turning device and package abut.

7. Apparatus according to any preceding claim wherein the turning device (14, 42) comprises an arm.

8. Apparatus according to claim 7 wherein the arm has a face (16, 44) operative to abut the packaging (C) and which is contoured to enable the packaging to stay in contact with the face whilst the packaging turns.

9. Apparatus according to any preceding claim wherein the turning device (14, 42) comprises a stopper (18, 46) which inhibits further rotation of a package (C) beyond a certain angle.

10. Apparatus according to claim 9 wherein the stopper (18) comprises a lug which operatively protrudes from the turning device substantially along the direction of the packaging feed path (F) when the turning device (14) is moving along the corresponding part of its path of movement so that the package (C) is restricted from rotating beyond the lug (18).

**Patentansprüche**

1. Vorrichtung zum Drehen von Verpackungen, umfassend eine Drehvorrichtung (14, 42) zum Anstoßen und Drehen einer Verpackung (C), wenn sie entlang eines Zuführweges (F) gefördert wird, wobei die Drehvorrichtung (14, 42) mit einem Antriebsmechanismus (22) verbunden ist, der die Drehvorrichtung über einen Weg (L, M) bewegt, was wenigstens teilweise ein Hineinragen der Drehvorrichtung in den Zuführweg der Verpackung zuläßt, dadurch gekennzeichnet, daß die Vorrichtung eine Steuereinrichtung zur Steuerung des Antriebsmechanismus umfaßt, wobei die Steuereinrichtung eine Einrichtung (48) zur Bestimmung der Bewegungsgeschwindigkeit von Verpackungen entlang des Zuführweges aufweist und eine Einrichtung, die der Steuereinrichtung die Bestimmung des Auftreffens einer Verpackung auf die Drehvorrichtung erlaubt, aufweist, und wobei die Steuereinrichtung sicherstellt, daß sich die Drehvorrichtung mit einer Geschwindigkeit bewegt, die geringer ist, als die der Verpackung am Punkt des Auftreffens, wodurch die Verpackung gedreht wird.

2. Vorrichtung gemäß Anspruch 1, wobei der Bewegungsweg der Drehvorrichtung, wenn sie in Kontakt mit einer Verpackung steht, im wesentlichen linear ist.

3. Vorrichtung gemäß Anspruch 2, wobei sich die Drehvorrichtung (42) entlang eines im wesentlichen linearen Bewegungsweges (M) hin- und herbewegt.

4. Vorrichtung gemäß Anspruch 2, wobei sich die Drehvorrichtung (14) entlang eines Endlosweges bewegt.

5. Vorrichtung gemäß Anspruch 3, umfassend zwei oder mehr voneinander entlang des Endlosweges versetzte Drehvorrichtungen.

6. Vorrichtung gemäß einem der vorstehenden Ansprüche, wobei die Steuereinrichtung den Antriebsmechanismus (22) so einstellt, daß die Geschwindigkeit der Drehvorrichtung (14, 42) etwa ein Drittel von 1 m pro Sekunde (oder etwa 20 m pro Minute) langsamer ist, als die Geschwindigkeit der Verpackung (C), und zwar zu dem Zeitpunkt, an dem die Drehvorrichtung an der Verpackung anstößt.

7. Vorrichtung gemäß einem der vorstehenden Ansprüche, wobei die Drehvorrichtung (14, 42) einen Arm umfaßt.

8. Vorrichtung gemäß Anspruch 7, wobei der Arm eine Fläche (16, 44) aufweist, die im Betrieb an die Verpackung (C) anstößt und die so geformt ist, daß die Verpackung in Kontakt mit der Fläche bleiben kann, während sich die Verpackung dreht.

9. Vorrichtung gemäß einem der vorstehenden Ansprüche, wobei die Drehvorrichtung (14, 42) einen Anschlag (18, 46) umfaßt, der eine weitere Drehung der Verpackung (C) über einen bestimmten Winkel hinaus hemmt.

10. Vorrichtung gemäß Anspruch 9, wobei der Anschlag (18) eine Nase umfaßt, die beim Betrieb über die Drehvorrichtung im wesentlichen entlang der Richtung des Verpackungszuführweges (F) hinausragt, wenn sich die Drehvorrichtung (14) entlang des entsprechenden Teils ihres Bewegungswegs bewegt, so daß die Verpackung (C) an der Drehung über die Nase (18) hinaus gehindert wird.

**Revendications**

1. Appareil pour faire pivoter un emballage comportant un dispositif de pivotement (14, 42) destiné à venir en butée avec un emballage (C) et le faire pivoter lorsqu'il est transporté le long d'un trajet d'acheminement (F), ledit dispositif de pivotement (14, 42) étant relié à un mécanisme d'entraînement (22) qui déplace de manière opérationnelle le dispositif de pivotement à travers un trajet (L, M) qui au moins en partie permet au dispositif de pivotement de faire saillie dans le trajet d'acheminement de l'emballage, caractérisé en ce que l'appareil comporte de plus un circuit de commande pour commander le mécanisme d'entraînement, ayant des moyens (48) pour déterminer la vitesse de déplacement d'un emballage le long du trajet d'acheminement et des moyens pour permettre au circuit de commande de déterminer l'incidence d'un emballage avec le dispositif de pivotement et le circuit de commande assure que le dispositif de pivotement se déplace à une vitesse plus faible que l'emballage au point d'incidence, pour faire ainsi pivoter l'emballage.

2. Appareil selon la revendication 1, dans lequel le trajet de déplacement du dispositif de pivotement lorsqu'il est en contact avec un emballage est sensiblement linéaire.

3. Appareil selon la revendication 2, dans lequel le dispositif de pivotement (42) se déplace en va-et-vient le long d'un trajet de déplacement (M) sensiblement linéaire.

4. Appareil selon la revendication 2, dans lequel le dispositif de pivotement (14) se déplace le long d'un trajet sans fin.

5. Appareil selon la revendication 3, comportant deux ou plus de deux dispositifs de pivotement décalés l'un par rapport à l'autre le long du trajet sans fin.

6. Appareil selon l'une quelconque des revendications précédentes, dans lequel le circuit de commande règle le mécanisme d'entraînement (22) de sorte que la vitesse du dispositif de pivotement (14, 42) est approximativement un tiers de mètre par seconde (ou environ 20 mètres par minute) plus lente que la vitesse de l'emballage (C) au moment où le dispositif de pivotement et l'emballage viennent en butée.

7. Appareil selon l'une quelconque des revendications précédentes, dans lequel le dispositif de pivotement (14, 42) comporte un bras.

8. Appareil selon la revendication 7, dans lequel le bras a une face (16, 44) active pour venir en butée avec l'emballage (C) et qui est profilée pour permettre à l'emballage de rester en contact avec la face lorsque l'emballage pivote.

9. Appareil selon l'une quelconque des revendications précédentes, dans lequel le dispositif de pivotement (14, 42) comporte une butée (18, 46) qui empêche une rotation supplémentaire d'un emballage (C) au-delà d'un certain angle.

10. Appareil selon la revendication 9, dans lequel la butée (18) comporte une patte qui fait saillie de manière opérationnelle à partir du dispositif de pivotement sensiblement dans la direction du trajet d'acheminement d'emballage (F) lorsque le dispositif de pivotement (14) se déplace le long de la partie correspondante de son trajet de déplacement de sorte que l'emballage (C) est empêché de pivoter au-delà de la patte (18).

FIG. 1

EP 0 752 972 B1

# FIG. 2

FIG.3

EP 0 752 972 B1

## FIG.4

## FIG.5

## FIG.6

## FIG.7

## FIG.8

## FIG.9